# EUROPEAN PATENT APPLICATION

(11) **EP 1 473 571 A1**
(43) Date of publication of application: **03.11.2004**
(21) Application number: 02790763.3
(22) Date of filing: 13.12.2002
(51) Int. Cl.: G01P 15/09, G01P 15/18

(54) **PIEZOELECTRIC ACCELERATION SENSOR**

(30) Priority: 04.02.2002 JP 2002026277
(71) Applicant: STAR MICRONICS CO., LTD., Shizuoka-shi, Shizuoka-ken 422-8654 (JP)
(72) Inventor: WAKI, Hisami, c/o STAR MICRONICS CO. LTD., Shizuoka-shi, Shizuoka 422-8654 (JP); KATSUOKA, Kentaro, c/o STAR MICRONICS CO. LTD., Shizuoka-shi, Shizuoka 422-8654 (JP); YAMADA, Hiromi, c/o STAR MICRONICS CO. LTD., Shizuoka-shi, Shizuoka 422-8654 (JP); TAKEDA, Hideki, c/o STAR MICRONICS CO. LTD., Shizuoka-shi, Shizuoka 422-8654 (JP)
(74) Representative: Skone James, Robert Edmund
(86) International application number: PCT/JP2002/013107
(87) International publication number: WO 2003/067266

(57) **Abstract**

A piezoelectric acceleration sensor comprising an acceleration detecting unit having a weight fixed to one surface of a diaphragm and a piezoelectric element fixed to another surface thereof by bonding a reverse surface of the piezoelectric element thereto, and surface electrodes and reverse electrodes being respectively formed on respective surfaces of the piezoelectric element, wherein a supporting pattern for maintaining a distance between the diaphragm and the surface electrodes uniformly is formed on the reverse surface of the piezoelectric element so as to suppress unevenness in bonding at the time of a connection of the piezoelectric element and the diaphragm, and eliminate a variation of detection sensitivity of each axis.

## Description

### TECHNICAL FIELD

The present invention relates to a piezoelectric acceleration sensor using a piezoelectric element.

### BACKGROUND ART

An acceleration sensor is widely used in fields of an automotive industry, a machinery industry, and the like, and is used, for example, as a sensor for controlling an airbag installed in an automobile. Acceleration sensors are classified into a one-axis type, a three-axis type, and the like depending on the number of detecting directions, and types of detection include a piezo-resistive type, a capacitive type, a piezoelectric type, and the like.

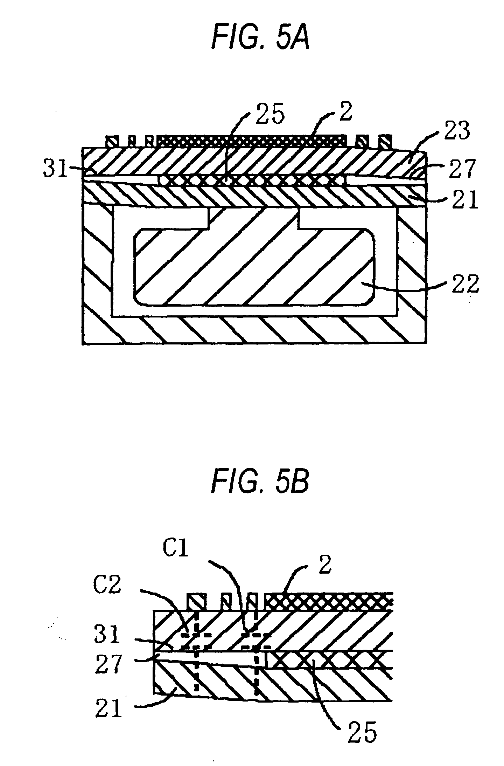

Fig. 5 is a drawing illustrating a configuration of a conventional piezoelectric acceleration sensor related to the present invention. Fig. 5A is a simplified overall cross-sectional view, and Fig. 5B is a partial cross-sectional view of essential portions. The piezoelectric acceleration sensor is a sensor in which a diaphragm is distorted by an acceleration caused in a weight, and this distortion is detected by making use of a piezoelectric effect. As shown in Fig. 5A, a configuration in which a weight 22 is connected with a lower surface of a diaphragm 21 and a piezoelectric element 23 is connected with an upper surface thereof is common as an acceleration detecting unit 2. Detection electrodes, a wiring for connecting these electrodes, and connection electrodes for extracting outputs of the detection electrodes are formed on an obverse surface of the piezoelectric element 23. Further, reverse electrodes 25 are formed on a reverse surface of the piezoelectric element 25 in such a manner as to oppose the detection electrodes. These reverse electrodes 25 produce a floating capacity between the same and a wiring pattern on the obverse surface. Since this floating capacity causes a decline in a detection sensitivity, the reverse electrodes 25 are formed on only portions corresponding to portions where the detection electrodes are formed, so as to prevent the decline in the detection sensitivity.

A reverse surface of the piezoelectric element 23 is connected with the diaphragm 21 by filing an insulating acrylic adhesive agent in an electrode unformed portion 31 and a bonding layer 27 surrounded by the diaphragm 21 and the reverse electrodes 25. A thickness of the bonding layer 27 is restricted by a thickness of the reverse electrodes 25. If the reverse electrodes 25 are formed on only portions corresponding to portions where the detection electrodes on the obverse surface are formed, as described above, it becomes impossible to restrict the thickness of the bonding layer 27 by the reverse electrodes 25 particularly at end portions of the piezoelectric element 23, as shown in Fig. 5A. Therefore, the piezoelectric element 23 is connected with the diaphragm 21 in a state where partial warpage occurs in the piezoelectric element 23 or the diaphragm 21. As such unevenness in bonding occurs, variation occurs in the thickness of the bonding layer 27, so that the floating capacity differs between the respective portions of the electrode unformed portion 31. In an example shown in Fig. 5B, since the thickness of the bonding layer 27 is smaller at the end portion side than in the vicinities of the reverse electrodes 25, a relationship of C1 < C2 holds between electrostatic capacities C1 and C2 (including floating capacities) per unit area occurring between the wiring and the like formed on the obverse surface and the diaphragm 21. For example, if the thickness of the piezoelectric element 23 (dielectric constant: 1850) is set to 150 µm, and the thickness of each reverse electrode 25 is formed to be 2 µm (dielectric constant of the adhesive: 4), the electrostatic capacity C1 per square millimeter becomes 15.2 pF. On the other hand, in a case where the thickness of the bonding layer 27 partially becomes 0.3 µm and the unevenness in bonding occurs, the electrostatic capacity C2 per square millimeter becomes 50.6 pF, which is an approximately 3.3-fold capacity with respect to C1. This variation in electrostatic capacity occurs in respective portions of the acceleration detecting unit 2, and affects the detection sensitivity for each of an X-axis, a Y-axis, and a Z-axis formed on the obverse surface of the piezoelectric element 23 in a dispersed manner. If it is assumed that an area of the wiring for each axis is 2 square millimeters and the detection electrodes (electrostatic capacity: 240 pF) are also formed on an identical area, and if all the wiring for connecting the electrodes for detecting the acceleration in the X-axis direction is assumed to be formed in the electrostatic capacity C1 portion on the piezoelectric element 23, and all the wiring for connecting the electrodes for detecting the acceleration in the Y-axis direction is assumed to be formed in the electrostatic capacity C2 portion, the detection sensitivity in the Y-axis direction will decline about 20% with respect to the X-axis direction. Thus, with the conventional acceleration sensors, the detection sensitivity differs for each axis. In a case where such an acceleration sensor is used, it is necessary to adjust the sensitivity for each axis on a processing circuit side for processing output signals of the acceleration sensor. Hence, this has resulted in a complexity of a circuit configuration and increased cost.

### DISCLOSURE OF THE INVENTION

An object of the present invention is to provide a piezoelectric acceleration sensor which makes it possible to suppress unevenness in bonding at the time of a connection of a piezoelectric element and a diaphragm, and eliminate a variation of detection sensitivity of each axis.

In accordance with the present invention, there is provided a piezoelectric acceleration sensor comprising: an acceleration detecting unit having a weight fixed to one surface of a diaphragm and a thinplate-like piezoelectric element fixed to another surface thereof by bonding a reverse surface of the piezoelectric element thereto; and surface electrodes and reverse electrodes being respectively formed on respective surfaces of the piezoelectric element, characterized in that a supporting pattern for maintaining a distance between the diaphragm and the surface electrodes uniformly is formed on the reverse surface of the piezoelectric element.

In accordance with the present invention, since the supporting pattern for maintaining the distance between the diaphragm and the surface electrodes uniformly is formed on the reverse surface of the piezoelectric element, it is possible to suppress unevenness in bonding at the time of the connection of the piezoelectric element and the diaphragm, anduniformalize a floating capacity occurring in each axis.

In addition, in the present invention, preferably, the reverse electrodes of the piezoelectric element are formed so as to oppose the surface electrodes, and the supporting pattern is formed so as to oppose a wiring pattern for connecting the surface electrodes.

In accordance with the present invention, as for electrodes and patterns on the respective surfaces of the piezoelectric element, since the reverse electrodes are formed so as to oppose the surface electrodes, and the supporting pattern is formed so as to oppose the wiring pattern, it is possible to reduce the floating capacity occurring between the wiring pattern and the reverse electrodes.

In addition, in the present invention, the supporting pattern is preferably disposed so as to be substantially perpendicular to the wiring pattern.

In accordance with the present invention, since the wiring pattern of the piezoelectric element and the supporting pattern are disposed so as to be substantially perpendicular to each other, it is possible to minimize an area of overlap of the wiring pattern and the supporting pattern, thereby making it possible to suppress the occurrence of the floating capacity. In addition, even if a slight deviation occurs in the disposition of the respective patterns at the time of manufacturing, since the area of overlap of the wiring pattern and the supporting pattern does not change, variations in the floating capacity of the respective axes are small.

### BRIEF DESCRIPTION OF THE DRAWINGS

Fig. 1 is a simplified plan view of a piezoelectric acceleration sensor in accordance with an embodiment of the invention;
Fig. 2 is a cross-sectional view taken along line II - II in Fig. 1;
Figs. 3A to 3C are an obverse surface view, a reverse surface view, and a perspective view taken from the obverse surface of a piezoelectric element 23 in accordance with the embodiment;
Fig. 4 is a partial cross-sectional view, taken along line IV - IV, of an acceleration detecting unit 2 in Fig. 3C; and
Figs. 5A and 5B are an overall cross-sectional view and a cross-sectional view of a conventional piezoelectric acceleration sensor.

### BEST MODE FOR CARRYING OUT THE INVENTION

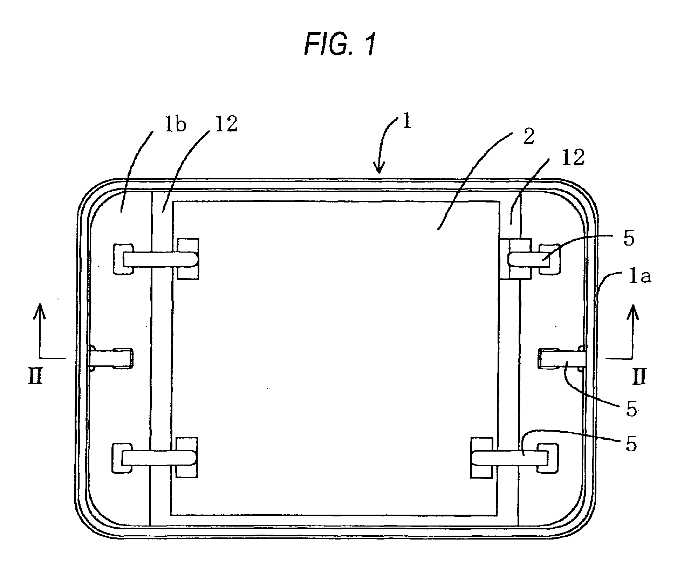

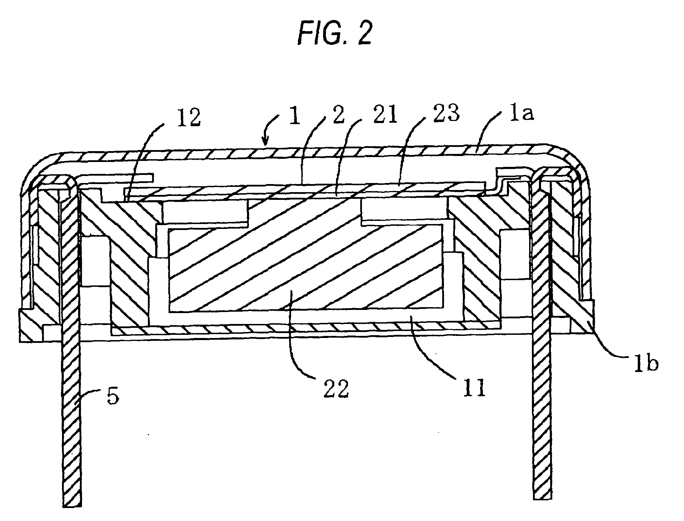

Fig. 1 is a simplified plan view of the piezoelectric acceleration sensor in accordance with an embodiment of the present invention. Fig. 2 is a cross-sectional view taken along line II - II in Fig. 1. In the drawings, reference numeral 1 denotes a casing, and 2 denotes an acceleration detecting unit. It should be noted that Fig. 1 is a drawing which has been drawn by omitting a portion of an upper portion of the casing 1 to facilitate an understanding of the internal structure.

The casing 1 consists of a metallic cover 1a and a resin-made base 1b. A circular recess 11 is formed in the center of the interior of the base 1b. Further, stepped portions 12 for setting the acceleration detecting unit 2 are formed around this recess 11. A plurality of terminals 5 are passed through the base 1b at a pair of mutually parallel edge portions of the base 1b, and their upper ends are bent in an L- or U-shape. The terminals 5 having the L-shaped portions are connected with the acceleration detecting unit 2, as shown in Fig. 1, while the terminals 5 having the U-shaped portions are connected with the cover 1a and the lower end portions of the terminals 5 is configured to be connection terminals for an external. Here, a connection with the cover 1a enhances a sealing effect with respect to external noise.

As shown in Fig. 2, as for the acceleration detecting unit 2, a disk-shaped weight 22 is connected with the center of a lower surface of a diaphragm 21, which is made of a rectangular metallic thin plate, by such means as welding. A ceramic-made piezoelectric element 23 having a shape and a size substantially identical to those of the diaphragm 21 is connected with an upper surface of the diaphragm 21.

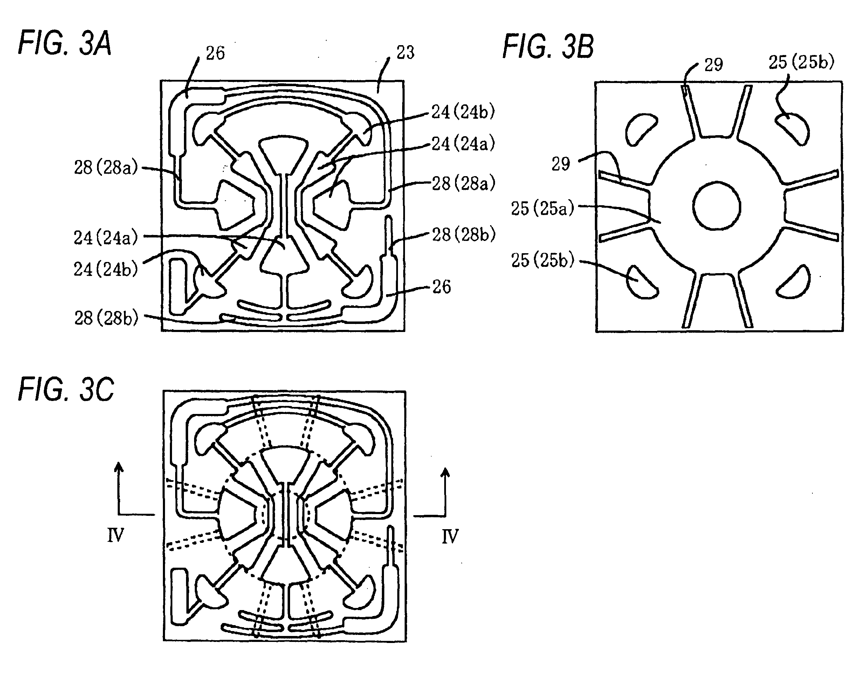

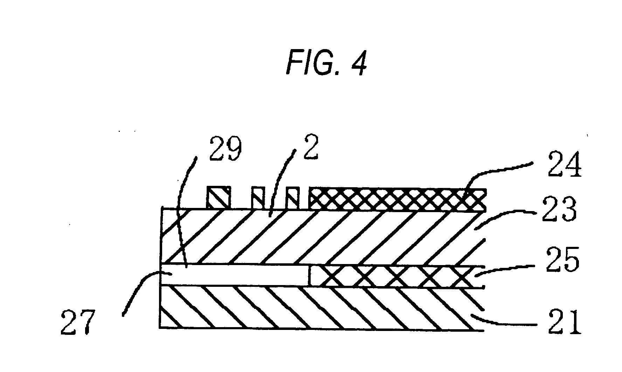

Fig. 3A shows an upper surface (obverse surface) of the piezoelectric element 23, Fig. 3B shows a lower surface (reverse surface) of the piezoelectric element 23, and Fig. 3C shows a perspective view of the piezoelectric element 23 as seen from the obverse surface side. Fig. 4 is a partial cross-sectional view taken along line IV - IV in Fig. 3C. As shown in these drawings, surface electrodes 24 are formed on an obverse surface of the piezoelectric element 23, and reverse electrodes 25 are formed on the reverse surface thereof. These electrodes are respectively formed by a baking of an electrically conductive material.

As shown in Fig. 3A, the surface electrodes 24 are patterned radially with respect to the center of the piezoelectric element 23, and are classified into a plurality of fan-shaped acceleration detecting electrodes (hereafter referred to as the detection electrodes) 24a which are annular as a whole and semicircular noise eliminating electrodes 24b formed at four peripheral portions of the detection electrodes 24a. Further, connection electrodes 26 connected with the respective electrodes 24 by the wiring 28 are formed at obverse surface corner portions of the piezoelectric element 23. The wiring 28 is classified into the wiring 28a for connecting the electrodes 24 and the wiring 28b branching from the wiring 28a and the connection electrodes 26 and formed in a branch form. The wiring 28b adjusts a length of the wiring 28 of each axis, and the sum of wiring lengths of the wiring 28a and the wiring 28b are made to agree with each other at the respective axes, thereby suppressing the variation of the electrostatic capacity occurring in the respective axes. Meanwhile, as shown in Fig. 3B, the reverse electrodes 25 are classified into a central electrode 25a formed on reverse surfaces of the detection electrodes 24a in an annular form so as to cover the entire electrodes 24a and corner electrodes 25b formed on reverse sides of each noise eliminating electrode 24b so as to cover the electrodes 24b. Further, a supporting pattern 29 is formed on a reverse surface of the piezoelectric element 23 in such a manner as to extend radially from the central electrode 24a toward end portions of the piezoelectric element 23. The supporting pattern 29 is formed with a thickness identical to those of the central electrode 25a and the corner electrodes 25b.

Fig. 3C is a perspective view of the piezoelectric element 23 as seen from the obverse surface side, and the surface electrodes 24, the connection electrodes 26, and the wiring 28 are shown by solid lines, while the reverse electrodes 25 and the supporting pattern 29 are shown by phantom lines. As shown in this Fig. 3C, the central electrode 25a and the corner electrodes 25b of the reverse electrodes 25 are respectively provided at positions opposing the detection electrodes 24a and the noise eliminating electrodes 24b of the surface electrodes 24 so as to cover the electrodes 24. In addition, the supporting pattern 29 is provided at positions opposing the wiring 28 in such a manner as to be substantially perpendicular to the wiring 28.

As shown in Fig. 4, the reverse surface of the piezoelectric element 23 is connected with the diaphragm 21 by an insulating acrylic adhesive agent, and a bonding layer 27 is formed between the diaphragm 21 and the piezoelectric element 23 owing to the thickness of the reverse electrodes 25. Since this bonding layer 27 is supported by the supporting pattern 29 formed with a thickness identical to that of the reverse electrodes 25, a substantially identical thickness is maintained at any region of the piezoelectric element 23. The reverse electrodes 25 and the diaphragm 21 are coupled electrically to each other by being connected by the adhesive agent so as to form common electrodes. As shown in Fig. 2, the acceleration detecting unit 2 thus formed as a unit is accommodated in the casing 1 in a state where the weight 22 is accommodated in the recess 11, and edge portions of the diaphragm 21 and the piezoelectric element 23 are superposed on the stepped portions 12 around the recess 11 in the casing 1.

As described above, in accordance with the embodiment, since the supporting pattern 29 is formed on the reverse surface of the piezoelectric element 23, it is possible to prevent unevenness in bonding occurring at the time of the connection with the diaphragm 21. Accordingly, it is possible to uniformalize the floating capacity occurring at the respective axes, thereby making it possible to suppress the variation of detection sensitivity at the respective axes.

In addition, it is possible to minimize the occurrence of the floating capacity since the reverse electrodes 25 and the surface electrodes 24 are provided in such a manner as to oppose and overlap each other, and the supporting pattern 29 is provided at positions opposing the wiring 28 on the obverse surface. In addition, since the supporting pattern 29 and the wiring 28 intersect each other so as to be substantially perpendicular to each other, even if a slight deviation occurs between the positions of the supporting pattern 29 and the wiring 28 at the manufacturing stage, there is no change in the area of overlap between the supporting pattern 29 and the wiring 28. Hence, variations do not occur concerning the detection sensitivity for each of products.

Although in the embodiment an example is shown in which the supporting pattern 29 is formed radially outwards from the center of the piezoelectric element 23, this supporting pattern 29 is sufficient in any form insofar as it opposes the wiring 28 andmaintains the thickness of the bonding layer 27 uniformly. For example, it is conceivable to provide an annular pattern with different diameters around an outer periphery of the central electrode 25a so as to surround the electrode 25a. Further, it is also possible to realize by a combination of this annular pattern and a radial pattern shown in the embodiment. Furthermore, it is possible to obtain a similar effect by disposing columnar patterns in various portions on the reverse surface of the piezoelectric element 23.

### ADVANTAGES OF THE INVENTION

According to the invention, since it is possible to suppress unevenness in bonding at the time of the connection of the piezoelectric element and the diaphragm, anduniformalize the occurrence of the floating capacity in each portion of the acceleration detecting unit, it is possible to suppress the variation of detection sensitivity. Accordingly, adjustment of the detection sensitivity and a circuit for the adjustment are made unnecessary, thereby permitting simplification of an apparatus and a reduction in cost. In addition, since the floating capacity occurring in the wiring pattern is reduced, and variations in the manufacturing state are small, it is possible to provide an acceleration sensor whose detection sensitivity is excellent and reliability is high.

## Claims

1. A piezoelectric acceleration sensor comprising:
an acceleration detecting unit having a weight fixed to one surface of a diaphragm and a thin plate-like piezoelectric element fixed to another surface thereof by bonding a reverse surface of the piezoelectric element thereto; and
surface electrodes and reverse electrodes being respectively formed on respective surfaces of the piezoelectric element, **characterized in that**
a supporting pattern for maintaining a distance between the diaphragm and the surface electrodes uniformly is formed on the reverse surface of the piezoelectric element.

2. The piezoelectric acceleration sensor according to claim 1, **characterized in that**
the reverse electrodes of the piezoelectric element are formed so as to oppose the surface electrodes, and
the supporting pattern is formed so as to oppose a wiring pattern for connecting the surface electrodes.

3. The piezoelectric acceleration sensor according to claim 1, **characterized in that**
the reverse electrodes of the piezoelectric element are formed so as to oppose the surface electrodes, and
the supporting pattern is formed so as to be substantially perpendicular to a wiring pattern for connecting the surface electrodes.
